# FASCICULE DE BREVET EUROPEEN

(11) **EP 3 502 016 B1**
(45) Date de publication et mention de la délivrance du brevet: **02.03.2022**
(21) Numéro de dépôt: 18153535.2
(22) Date de dépôt: 25.01.2018
(51) Int. Cl.: B65G 47/14

(54) **SYSTÈME DE DISTRIBUTION CONTRÔLÉE DE COMPOSANTS**
KONTROLLIERTES VERTEILUNGSSYSTEM VON KOMPONENTEN
SYSTEM FOR CONTROLLED DISTRIBUTION OF COMPONENTS

(30) Priorité: 21.12.2017 CH 15892017
(43) Date de publication de la demande: 26.06.2019
(73) Titulaire: ETA SA Manufacture Horlogère Suisse, 2540 Grenchen (CH)
(72) Inventeur: Charbonnet, Frédéric, 1996 Basse-Nendaz (CH)
(74) Mandataire: ICB SA

(56) Documents cités:
- JP-A- H0 871 865
- JP-A- H05 132 121
- JP-A- H06 115 667
- JP-A- H07 132 421
- JP-A- H08 231 020
- JP-A- S59 182 112
- US-A- 4 527 326
- US-A1- 2010 063 629

## Description

### Domaine technique

La présente invention concerne un système de distribution contrôlée de composants notamment de composants horlogers pour une installation d'assemblage automatique de tout ou partie d'une pièce réalisée à partir d'au moins un de ces composants, notamment d'une pièce d'horlogerie et une telle installation d'assemblage automatique.

### Art antérieur

Dans l'état de la technique, il est connu d'utiliser un bol vibrant dans un système de distribution de composants par exemple de composants horlogers comme dans le cadre d'une installation d'assemblage automatique de pièces d'horlogeries. Un tel bol est classiquement monté sur un support générant des vibrations qui impriment à ces composants horlogers généralement légèrement huilés, un mouvement de rotation autour d'un axe de révolution vertical de ce bol. Un tel mouvement conduit ces composants horlogers à s'engager sur une rampe définie sur la paroi latérale du bol, et à s'élever progressivement jusqu'au sommet de cette paroi. Dans cette configuration, les composants qui se présentent à ce sommet peuvent alors s'engager dans un couloir d'alimentation défini dans la continuité de cette rampe en étant fixé à cette paroi latérale du bol. Ce couloir d'alimentation s'étend longitudinalement selon une direction parallèle à une tangente à une paroi périphérique externe de ce bol perpendiculaire à un plan comprenant l'axe de révolution vertical de ce bol. Un tel couloir vise à alimenter un support de distribution défini au sommet de la paroi et s'étendant vers l'extérieur du bol sur laquelle sont disposés les composants provenant du couloir devant être saisis par un bras de préhension pour être distribués à une machine d'assemblage de l'installation d'assemblage automatique en prévision de la réalisation de tout ou partie d'une pièce d'horlogerie.

Toutefois de tels systèmes de distribution de composants horlogers manquent souvent de fiabilité dans le cadre de leur fonctionnement. En effet, ils sont régulièrement sujets à des disfonctionnements pouvant résulter d'une accumulation excessive de composants sur la rampe ou encore au niveau du couloir d'alimentation émanant de coincements dans ce couloir engendrés par ces composants légèrement huilés ou présentant une géométrie imparfaite. Dans ces conditions, une intervention manuelle est systématiquement nécessaire pour remettre le système en état de fonctionnement.

De plus on notera que dans ces systèmes de distribution, les composants horlogers qui ne sont pas saisis correctement par le bras de préhension tombent systématiquement à l'extérieur du bol vibrant ce qui engendre des pertes qui ont une incidence sur une augmentation non négligeable des coûts de production de telles pièces d'horlogerie. US 2010/063629 A1 décrit un système selon le préambule de la revendication 1.

### Résumé de l'invention

Un but de la présente invention est par conséquent de proposer un système de distribution contrôlée de composants notamment de composants horlogers permettant de surmonter les inconvénients de l'état de la technique en améliorant la fiabilité du bol vibrant constituant ce système.

Dans ce dessein, l'invention porte sur un système selon la revendication 1 de distribution contrôlée de composants notamment de composants horlogers pour une installation d'assemblage automatique de tout ou partie d'une pièce réalisée à partir d'au moins un de ces composants, notamment d'une pièce d'horlogerie, le système comprenant :
- un bol vibrant pourvu d'une enceinte ayant une paroi s'étendant tout autour d'un axe de révolution du bol et dans laquelle lesdits composants sont introduits en vrac, et
- un bras de préhension articulé prévu pour assurer la distribution desdits composants à ladite installation d'assemblage automatique, le bol vibrant comprenant une rampe hélicoïdale ascendante s'étendant le long d'une face interne de ladite paroi entre un fond et un bord supérieur dudit bol vibrant constituant une sortie de ladite rampe, lesdits composants étant susceptibles de cheminer le long de cette rampe vers une plateforme d'alimentation, notamment une glissière, sur laquelle est disposée au moins un composant en prévision de sa saisie par le bras de préhension articulé, ladite plateforme d'alimentation étant reliée à ladite sortie et s'étendant au-dessus ou dans de l'enceinte du bol vibrant.

Dans d'autres modes de réalisation :
- la plateforme d'alimentation s'étend radialement dans le bol vibrant (3) selon l'axe vertical ;
- la plateforme d'alimentation s'étend radialement dans ce bol vibrant sensiblement du bord supérieur audit axe vertical ;
- la plateforme d'alimentation s'étend radialement dans ce bol vibrant selon l'axe vertical en ayant une extrémité libre comprise entre la sortie de la rampe et une zone du bord supérieur diamétralement opposée à cette sortie par rapport à l'axe vertical ; a première partie présente une longueur supérieure ou sensiblement supérieure à la longueur de la deuxième partie ;
- la première partie comprend une face supérieure plane formant un support sur lequel les composants sont susceptibles de se déplacer en vue d'être saisis par le bras de préhension articulé ;
- la première partie s'étend radialement notamment de manière rectiligne en ayant sa face supérieure comprise dans un plan comportant le bord supérieur dudit bol vibrant et/ou une ouverture de l'enceinte dudit bol vibrant ;
- la première partie s'étend radialement notamment de manière rectiligne en ayant sa face supérieure comprise dans un plan parallèle ou sensiblement parallèle à un plan comportant le bord supérieur dudit bol vibrant et/ou une ouverture de l'enceinte dudit bol vibrant ;
- la première partie de la plateforme d'alimentation comprend une zone de distribution comprise sensiblement à son extrémité libre et dans laquelle zone est disposé le composant horloger en prévision de sa saisie par le bras de préhension articulé ;
- la première partie de la plateforme d'alimentation comprend un détecteur de présence du composant horloger dans la zone de distribution ;
- la portion de liaison est reliée mécaniquement à une face inférieure de la première partie ;
- les portions de guidage sont définies pour diriger les composants vers l'enceinte du bol vibrant au moins un composant horloger initialement présent sur la première partie de cette plateforme d'alimentation et qui en est évacué ;
- le bol vibrant comprend un dispositif de tri/sélection des composants défini à proximité de la première partie de la plateforme d'alimentation ;
- le bol vibrant comprend un dispositif de séparation d'au moins deux composants agencé au-dessus de la zone de distribution ;
- le composant horloger est sélectionné parmi des composants notamment correspondant à des objets de révolution de taille millimétrique, et
- la rampe comprend un bord latéral recourbé ou sensiblement recourbé en direction de l'ouverture du bol vibrant participant au maintien des composants sur cette rampe lors de leur progression.

L'invention concerne aussi une installation d'assemblage automatique selon la revendication 14 de tout ou partie d'une pièce réalisée à partir d'au moins un composant, notamment d'une pièce d'horlogerie, comprenant au moins un tel système de distribution contrôlée de composants.

Ainsi grâce à ces caractéristiques, le système de distribution permet ainsi d'améliorer la circulation des composants notamment de composants horlogers dans le bol vibrant ainsi que l'optimisation du tri de ces derniers en ne prévoyant plus de couloir d'alimentation mais une plateforme d'alimentation qui est donc découverte. De plus, les pertes et dommages causés à ces composants sont limités voire quasi-nulles grâce à une récupération systématique des composants progressant sur la plateforme d'alimentation qui ne sont pas saisis par le bras de préhension articulé.

### Brève description des figures

D'autres caractéristiques et avantage de la présente invention apparaîtront à la lecture de plusieurs formes de réalisation données uniquement à titre d'exemples non limitatifs et faites en référence aux dessins annexés dans lesquels :
- la figure 1 est une représentation schématique relative à un système de distribution contrôlée de composants horlogers pour une installation d'assemblage automatique de tout ou partie d'une pièce d'horlogerie, selon un mode de réalisation de l'invention ;
- la figure 2 est une vue de dessus d'une première variante d'un bol vibrant du système de distribution, selon le mode de réalisation de l'invention, et
- la figure 3 est une vue de dessus d'une deuxième variante du bol vibrant du système de distribution, selon le mode de réalisation de l'invention.

### Description détaillée de l'invention

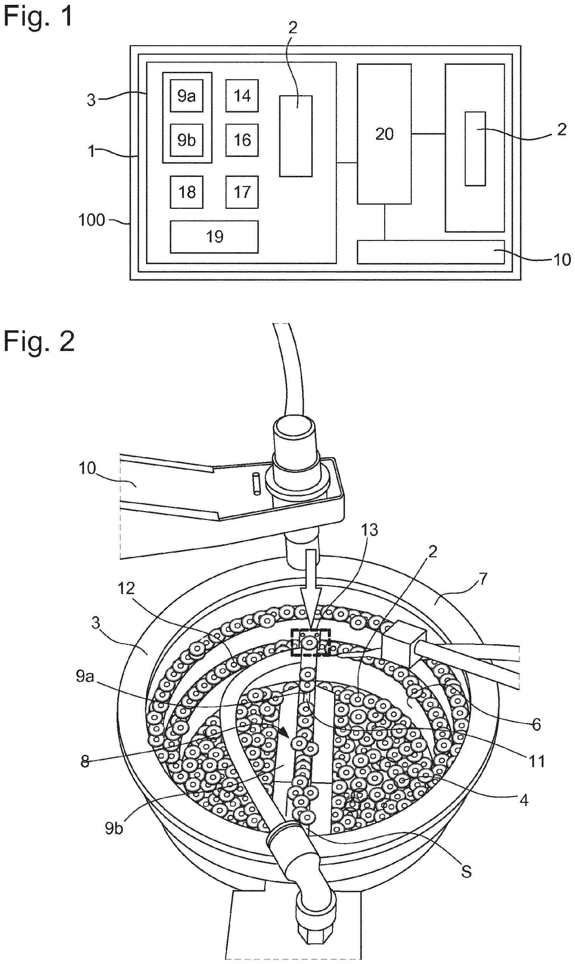

En référence à la figure 1, le système de distribution 1 contrôlée de composants 2 notamment de composants horlogers 2 comprend un bol vibrant 3 et un bras de préhension articulé 10 ainsi qu'une unité de contrôle 20 participant en tout ou partie au fonctionnement de ce système 1.

Dans le présent mode de réalisation de l'invention, les composants 2 distribués sont des composants horlogers 2. On comprend que n'importe quel type de composant peut être distribué par ce système 1 notamment dès lors qu'il s'agit d'un objet de taille millimétrique notamment de moins de 20 mm. Un tel système 1 est prévu pour assurer la distribution de composants horlogers 2 à une machine d'une installation d'assemblage automatique 100 ou chaîne d'assemblage automatique de tout ou partie d'une pièce d'horlogerie. On notera que les composants horlogers 2 distribués dans ce système 1 sont de préférence des objets de révolution de taille millimétrique notamment de moins de 20 mm.

Dans ce système 1, le bol 3 est pourvu d'une enceinte 4 ouverte au niveau d'une ouverture 12 définie par un bord supérieur 7 de ce bol 3. Ce bol 3 comprend un axe de révolution vertical qui est perpendiculaire ou sensiblement perpendiculaire à un plan comprenant l'ouverture 12 donnant accès à l'enceinte 4 de ce bol 3. Dans cette configuration, l'enceinte 4 comprend une paroi 6 qui s'étend tout autour de cet axe de révolution de sorte à conférer à ce bol 3 une forme générale d'une cuvette dans laquelle lesdits composants horlogers 2 sont introduits en vrac. Un tel bol 3 est amené à vibrer par rapport à son socle fixe à partir d'éléments électromécaniques qui ne sont pas détaillés ici.

Ce bol 3 comprend une rampe 5 hélicoïdale ascendante s'étendant le long d'une face interne de ladite paroi 6 entre un fond et un bord supérieur 7 de ce bol 3. Une telle rampe 5 est de préférence venue de matière avec cette paroi 6. En particulier, cette rampe 5 comprend une entrée définie au niveau du fond de ce bol 3 et une sortie S comprise dans le bord supérieur 7 du bol 3. Une telle rampe 5 contribue à assurer l'acheminement des composants horlogers 2 initialement déversés en vrac dans ce bol 3 du fond vers la sortie S de cette rampe 5 qui débouche sur une plateforme d'alimentation 8. Plus précisément, les éléments électromécaniques permettent d'animer le bol 3 d'un mouvement vibratoire autour de son axe de révolution pour faire cheminer les composants horlogers 2 contenus dans le bol 3, notamment l'un après l'autre, le long vers cette plateforme d'alimentation 8. On notera que la rampe 5 présente une section transversale perpendiculaire à l'axe de révolution du bol 3 qui est nonlinéaire. Effectivement, cette rampe 5 comprend un bord latéral qui est recourbé ou sensiblement recourbé en direction de l'ouverture 12 du bol 3 donnant accès son enceinte 4. Un tel bord latéral recourbé 20 vise à participer au maintien des composants horlogers 2 sur cette rampe 5 lors de leur progression sur cette rampe 5.

Dans ce bol 3, la plateforme d'alimentation 8 autrement appelée glissière, est agencée dans le bol 3 afin de recevoir les composants horloger provenant de la rampe 5 et de participer à une sélection/tri des composants horlogers 2 qui ne présentent pas une orientation attendue susceptible d'assurer leur saisie optimale par le bras de préhension articulé 10 en prévision de leur distribution dans l'installation d'assemblage automatique 100 de tout ou partie d'une pièce d'horlogerie.

Une telle plateforme d'alimentation 8 est de préférence une pièce rapportée qui est fixée à la sortie S de la rampe 5 et ce en formant un angle perpendiculaire ou sensiblement perpendiculaire avec la paroi 6 du bol 3. Dans ce bol 3, cette plateforme d'alimentation 8 s'étend au-dessus de l'enceinte 4 ou dans l'enceinte 4 de ce bol 3. Plus précisément, l'élément de présentation s'étend radialement dans ce bol vibrant 3 selon l'axe de révolution de révolution du bol 3. Autrement dit, l'élément de présentation s'étend radialement dans ce bol vibrant 3 sensiblement du bord supérieur 7 audit axe de révolution. En outre, l'élément de présentation s'étend radialement dans ce bol vibrant 3 selon l'axe de révolution de révolution en ayant une extrémité libre comprise entre la sortie S de la rampe 5 et une zone du bord supérieur 7 diamétralement opposée à cette sortie S par rapport à l'axe de révolution. Dans cette configuration, on comprend donc que le corps de cette plateforme d'alimentation 8 est dans sa globalité agencé au-dessus de l'enceinte 4 ou dans l'enceinte 4 de ce bol 3.

Une telle plateforme d'alimentation 8 comprend des première et deuxième parties 9a, 9b ayant des fonctions différentes dans le cadre du fonctionnement de ce bol 3. Dans cette configuration, la première partie 9a présente une longueur supérieure ou sensiblement supérieure à la longueur de la deuxième partie 9b.

Cette première partie 9a est une plaque comprenant des faces supérieure et inférieure présentant une section de préférence rectangulaire. Les faces supérieure et inférieure sont de préférence planes. En particulier, la face supérieure forme un support sur lequel les composants horlogers 2 provenant de la rampe 5 sont susceptibles de se déplacer en vue d'être saisis par le bras de préhension 5. On notera qu'une telle face supérieure peut comprendre une rainure s'étendant longitudinalement dans cette face pour participer à une configuration de l'orientation du composant horloger 2 en prévision de sa saisie par le bras de préhension 5. Une telle face supérieure s'étend radialement notamment de manière rectiligne en ayant sa face externe comprise dans un plan comportant le bord supérieur 7 dudit bol 3 vibrant 3 et/ou un plan comprenant l'ouverture 12 de l'enceinte 4 dudit bol vibrant 3. Dans une variante, cette face supérieure est comprise dans un plan parallèle ou sensiblement parallèle à un plan comportant le bord supérieur 7 dudit bol vibrant 3 et/ou de l'ouverture 12 de l'enceinte 4 dudit bol vibrant 3. Cette première partie 9a comprend une extrémité libre pourvue d'une zone de positionnement du composant devant être saisi par le bras de préhension articulé 10.

Dans cette plateforme d'alimentation 8, la deuxième partie (9b) comprend une portion de liaison et deux portions de guidage 15. Cette deuxième partie 9b a une section transversale de forme essentiellement trapézoïdale avec les deux portions de guidage 15 qui forme chacune un angle obtus avec la portion de liaison. Dans cette configuration, la portion de liaison est reliée mécaniquement à une face inférieure de la première partie 9a de la plateforme d'alimentation 8 et les portions de guidage 15 sont prévues pour diriger le ou les composants horlogers 2 qui ont été évacués de cette plateforme notamment par un dispositif de tri décrit par la suite. Ces portions de guidage 15 permettent dans ces conditions, d'orienter systématiquement ces composants dans l'enceinte 4 quel que soit le côté latéral de la plateforme qu'ils ont été amenés à quitter pour rejoindre cette enceinte 4.

Dans cette plateforme d'alimentation 8, la face inférieure de la première partie 9a est reliée mécaniquement à la portion de liaison de la deuxième partie 9b par soudage, collage ou encore emboitage. Dans une alternative, cette face inférieure peut être venue de matière avec cette portion de liaison de manière à ce que ces première et deuxième parties 9a, 9b forment un ensemble monobloc.

Ainsi que nous l'avons précédemment évoqué, le bol 3 comprend également un détecteur de présence (14) du composant horloger 2 agencé dans la zone de distribution 13 de la plateforme d'alimentation 8. Un tel détecteur comprend par exemple au moins un capteur de pression à vide et/ou au moins un capteur optique. Ce détecteur de présence (14) est de préférence agencé dans la plateforme d'alimentation 8 en particulier au niveau de cette de distribution.

Ce bol 3 peut comprendre aussi un dispositif de tri/sélection 16 des composants horlogers 2 qui est positionné à proximité de la première partie 9a de la plateforme de d'admission. Un tel agencement du dispositif de tri/sélection 16 par rapport à cette première partie 9a permet à ce dernier de pouvoir évacuer de la face supérieure de cette partie le ou les composants horlogers 2 qui ne présentent pas une orientation correcte pour pouvoir assurer leur saisi de manière optimale par le bras de préhension 5 lorsqu'ils seront positionnés dans la zone de distribution 13. Un tel dispositif de tri/sélection 16 comprend au moins un élément de projection/pulvérisation d'un fluide tel qu'une buse d'air relié à un compresseur d'air. Dans ce bol 3, deux buses d'air sont agencés en amont de la zone de distribution 13 en particulier au niveau d'un tronçon de parcours réalisé par les composants horlogers 2 sur la face supérieure de la première partie 9a située entre la sortie S de la rampe 5 et le milieu de cette face supérieure.

Le bol 3 comprend également un dispositif de protection du composant horloger 2 qui est agencé dans la zone de distribution 13 en prévision de sa saisie par le bras de préhension 5. Ce dispositif de protection comprend aussi au moins un élément de projection/pulvérisation d'un fluide tel qu'une buse d'air relié à un compresseur d'air. Dans ce bol 3, cette buse d'air est de préférence à proximité d'une portion de la face supérieure agencée avant la zone de distribution 13 avec laquelle est mitoyenne et ce de manière pouvoir pulvériser/projeter un flux d'air dans cette portion lorsqu'un composant horloger 2 est agencé dans la zone de distribution 13.

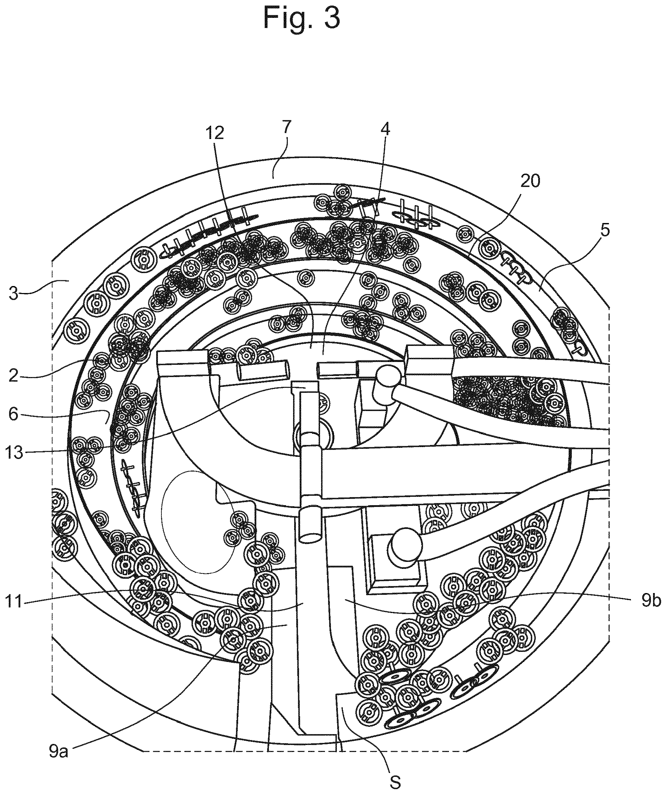

Ce bol 3 comprend aussi un dispositif de séparation 17 d'au moins deux composants horlogers 2 agencé au-dessus de la zone de distribution 13. Ce dispositif comprend au moins deux éléments flexibles montés sur un bras fixe visant à les positionnés au-dessus de cette zone de distribution 13. Dans la variante du bol 3 visible sur la figure 3, ce bol 3 comprend trois éléments flexibles dont les extrémités libres sont positionnées pour présenter un écart entre eux qui est inférieur ou sensiblement inférieur au volume du composant horloger 2 afin d'assurer une séparation entre deux de ces composants horlogers 2 qui seraient collés l'un a l'autre à cause de matière huileuse dont ils peuvent être en tout ou partie enduits. Dans ce contexte, le composant horloger 2 saisi par le bras de préhension 5 est alors distribuée dans l'installation d'assemblage automatique 100 et l'autre composant horloger 2 est diriger vers l'enceinte 4 du bol 3.

On notera que l'utilisation de l'air dans les dispositifs de tri/sélection et de protection permet de provoquer un déplacement d'un composant horloger 2 sans l'endommager.

Dans ce système 1, ainsi que nous l'avons vu, le bras de préhension articulé 10 est prévu pour assurer la distribution desdits composants horlogers 2 à ladite installation d'assemblage automatique 100

Ce système 1 comprend aussi une unité de contrôle 20 qui est connectée au bol 3 en particulier à des composantes de ce bol 3 telles que : le dispositif de tri, le dispositif de séparation 17 (selon la variante du bol vibrant 3), le détecteur de présence 14, dispositif de protection et les éléments électromécaniques. Cette unité de contrôle 20 est également connectée au bras de préhension articulé 10 ainsi qu'à un dispositif d'alimentation du bol 3 en composants horlogers 2 de ce système 1. Une telle unité de contrôle 20 peut être un ordinateur, et comprend des ressources matérielles et logicielles en particulier au moins un processeur coopérant avec des éléments de mémoire. Cette unité de contrôle 20 est apte à exécuter des instructions pour la mise en œuvre d'un programme d'ordinateur afin d'assure le pilotage du bol 3 et de du bras de préhension 5 dans le cadre de la distribution de ces composants horlogers 2 dans l'installation d'assemblage automatique 100.

Dans ce contexte, ce système 1 permet de mettre en oeuvre un procédé de distribution contrôlée de composants horlogers 2. Ce procédé comprend une étape d'introduction dans l'enceinte 4 du bol 3 des composants horlogers 2 légèrement huilés à distribuer. Lors de cette étape, l'unité de contrôle 20 pilote alors le dispositif d'alimentation du bol 3 en composants horlogers 2. Par la suite, lors d'une étape de fonctionnement du bol 3, l'unité de contrôle 20 active les éléments électromécaniques de manière à amener le bol 3 à vibrer par rapport à son socle fixe et provoquer le cheminement des composants horlogers 2 le long de cette rampe 5 jusqu'à parvenir de préférence l'un après l'autre sur la face supérieure de la plateforme d'alimentation 8. Sur le tronçon de parcours de ces composants horlogers 2 sur la face supérieure défini entre la sortie S et jusqu'à une moitié de ce parcours, ces composants horlogers 2 sont exposés à un flux d'air provenant du dispositif de tri/sélection 16 du bol 3 qui vise à écarter ceux d'entre eux qui ne présentent pas une orientation correcte en prévision de leur saisie par le bras de préhension articulé 10. Les composants horlogers 2 qui sont dans ces conditions évacués de cette face supérieure sont alors diriger systématiquement par les portions de guidage 15 de la plateforme d'alimentation 8 vers l'enceinte 4 du bol 3. Les composants horlogers 2 qui sont encore présent sur la face supérieure et qui présente donc une orientation correcte sont quant à eux sous l'effet des vibrations conduits un à un vers la zone de distribution 13. Dans ce contexte, lorsqu'un composant horloger 2 arrive dans la zone de distribution 13, détecteur de présence (14) identifie le positionnement du composant horloger 2 dans cette zone et transmet un signal en ce sens à l'unité de contrôle 20 qui déclenche alors le processus de saisie de ce composant par le bras de préhension articulé 10 en prévision de sa distribution dans l'installation d'assemblage automatique 100 et le déclenchement du dispositif de protection qui projette/pulvérise un flux d'air dans la portion de la face supérieure juxtaposée à la zone de distribution 13 afin d'évacuer de cette portion tout composant horloger 2 qui serait susceptible d'être dirigé vers cette zone de distribution 13 pendant lors du processus de saisie. On notera avantageusement qu'une telle saisie de ce composant horloger 2 est donc réalisée au-dessus ou dans l'enceinte 4 du bol 3 permettant en cas d'éventuelle chute du composant horloger 2 que ce dernier retourne dans cette enceinte 4.

## Revendications

1. Système de distribution (1) contrôlée de composants (2) notamment de composants horlogers pour une installation d'assemblage automatique (100) de tout ou partie d'une pièce réalisée à partir d'au moins un de ces composants (2), notamment d'une pièce d'horlogerie, le système (1) comprenant :
- un bol vibrant (3) pourvu d'une enceinte (4) ayant une paroi (6) s'étendant tout autour d'un axe de révolution du bol (3) et dans laquelle lesdits composants (2) sont introduits en vrac, et
- un bras de préhension articulé (10) prévu pour assurer la distribution desdits composants (2) à ladite installation d'assemblage automatique (100),
le bol vibrant (3) comprenant une rampe (5) hélicoïdale ascendante s'étendant le long d'une face interne de ladite paroi (6) entre un fond et un bord supérieur (7) dudit bol vibrant (3) constituant une sortie (S) de ladite rampe (5), lesdits composants (2) étant susceptibles de cheminer le long de cette rampe (5) vers une plateforme d'alimentation (8), notamment une glissière, sur laquelle est disposée au moins un composant (2) en prévision de sa saisie par le bras de préhension articulé (10), ladite plateforme d'alimentation (8) étant reliée à ladite sortie (S) et s'étendant au-dessus ou dans de l'enceinte (4) du bol vibrant (3)
**caractérisé en ce que** la plateforme d'alimentation (8) comprend des première et deuxième parties (9a, 9b) et **en ce que** dans la plateforme d'alimentation (8), la deuxième partie (9b) comprend une portion de liaison et deux portions de guidage (15), la deuxième partie (9b) ayant une section transversale de forme essentiellement trapézoïdale avec les deux portions de guidage (15) qui forme chacune un angle obtus avec la portion de liaison.

2. Système (1) selon la revendication précédente, **caractérisé en ce que** :
- la plateforme d'alimentation (8) s'étend radialement dans le bol vibrant (3) selon l'axe vertical, ou
- la plateforme d'alimentation (8) s'étend radialement dans ce bol vibrant (3) sensiblement du bord supérieur (7) audit axe vertical, ou
- la plateforme d'alimentation (8) s'étend radialement dans ce bol vibrant (3) selon l'axe vertical en ayant une extrémité libre comprise entre la sortie (S) de la rampe (5) et une zone du bord supérieur (7) diamétralement opposée à cette sortie (S) par rapport à l'axe vertical.

3. Système (1) selon l'une quelconque des revendications 1 et 2, **caractérisé en ce que** la première partie (9a) de la plateforme d'alimentation (8) présente une longueur supérieure ou sensiblement supérieure à la longueur de la deuxième partie (9b).

4. Système (1) selon l'une quelconque des revendications précédentes, **caractérisé en ce que** la première partie (9a) comprend une face supérieure (11) plane formant un support sur lequel les composants (2) sont susceptibles de se déplacer en vue d'être saisis par le bras de préhension articulé (10).

5. Système (1) selon la revendication précédente, **caractérisé en ce que** la première partie (9a) s'étend radialement notamment de manière rectiligne en ayant sa face supérieure (11) comprise :
- dans un plan comportant le bord supérieur (7) dudit bol vibrant (3) et/ou une ouverture (12) de l'enceinte (4) dudit bol vibrant (3), ou
- dans un plan parallèle ou sensiblement parallèle à un plan comportant le bord supérieur (7) dudit bol vibrant (3) et/ou une ouverture (12) de l'enceinte (4) dudit bol vibrant (3).

6. Système (1) selon l'une quelconque des revendications précédentes, **caractérisé en ce que** la première partie (9a) de la plateforme d'alimentation (8) comprend une zone de distribution (13) comprise sensiblement à son extrémité libre et dans laquelle zone (13) est disposé le composant horloger (2) en prévision de sa saisie par le bras de préhension articulé (10).

7. Système (1) selon la revendication précédente, **caractérisé en ce que** la première partie (9a) de la plateforme d'alimentation (8) comprend un détecteur de présence (14) du composant horloger (2) dans la zone de distribution (13).

8. Système (1) selon l'une quelconque des revendications précédentes, **caractérisé en ce que** la portion de liaison est reliée mécaniquement à une face inférieure de la première partie (9a).

9. Système (1) selon l'une quelconque des revendications précédentes, **caractérisé en ce que** les portions de guidage (15) sont définies pour diriger les composants (2) vers l'enceinte (4) du bol vibrant (3) au moins un composant horloger (2) initialement présent sur la première partie (9a) de cette plateforme d'alimentation (8) et qui en est évacué.

10. Système (1) selon l'une quelconque des revendications 1 à 9, **caractérisé en ce que** le bol vibrant (3) comprend un dispositif de tri/sélection (16) des composants (2) défini à proximité de la première partie (9a) de la plateforme d'alimentation (8).

11. Système (1) selon l'une quelconque des revendications 1 à 9, **caractérisé en ce que** le bol vibrant (3) comprend un dispositif de séparation (17) d'au moins deux composants (2) agencé au-dessus de la zone de distribution (13).

12. Système (1) selon l'une quelconque des revendications précédentes **caractérisé en ce que** le composant horloger (2) est sélectionné parmi des composants (2) notamment correspondant à des objets de révolution de taille millimétrique.

13. Système (1) selon l'une quelconque des revendications précédentes **caractérisé en ce que** la rampe (5) comprend un bord latéral (20) recourbé ou sensiblement recourbé en direction de l'ouverture du bol vibrant (3) participant au maintien des composants (2) sur cette rampe (5) lors de leur progression.

14. Installation d'assemblage automatique (100) de tout ou partie d'une pièce réalisée à partir d'au moins un composant, notamment d'une pièce d'horlogerie, comprenant au moins un système de distribution (1) contrôlée de composants (2) selon l'une quelconque des revendications précédentes.

## Patentansprüche

1. System zur kontrollierten Verteilung (1) von Komponenten (2), insbesondere von Uhrenkomponenten, für eine Anlage zum automatischen Zusammenbauen (100) des ganzen oder eines Teils eines Teils, das aus mindestens einer dieser Komponenten (2) hergestellt ist, insbesondere eines Teils für die Uhrmacherei, wobei das System (1) umfasst:
- einen Rüttler (3), der mit einem Behälter (4) ausgestattet ist, der eine Wand (6) hat, die sich vollständig um eine Drehachse des Rüttlers (3) erstreckt und in den die Komponenten (2) lose eingefüllt sind, und
- einen gelenkigen Greifarm (10), der zur Sicherstellung der Verteilung der Komponenten (2) auf die automatische Anlage zum Zusammenbauen (100) vorgesehen ist,
wobei der Rüttler (3) eine ansteigende schraubenförmige Rampe (5) umfasst, die sich entlang einer Innenseite der Wand (6) zwischen einem Boden und einem oberen Rand (7) des Rüttlers (3) erstreckt, der einen Ausgang (S) der Rampe (5) darstellt, wobei die Komponenten (2) imstande sind, sich entlang dieser Rampe (5) zu einer Versorgungsplattform (8), insbesondere einer Gleitschiene, zu bewegen, auf der mindestens eine Komponente (2) in Erwartung ihres Ergreifens durch den gelenkigen Greifarm (10) angeordnet ist, wobei die Versorgungsplattform (8) mit dem Ausgang (S) verbunden ist und sich oberhalb oder im Behälter (4) des Rüttlers (3) erstreckt,
**dadurch gekennzeichnet, dass** die Versorgungsplattform (8) einen ersten und zweiten Teil (9a, 9b) umfasst und dass in der Versorgungsplattform (8) der zweite Teil (9b) einen Verbindungsabschnitt und zwei Führungsabschnitte (15) umfasst, wobei der zweite Teil (9b) einen im Wesentlichen trapezförmigen Querschnitt mit den zwei Führungsabschnitten (15) hat, die jeweils einen stumpfen Winkel mit dem Verbindungsabschnitt bilden.

2. System (1) nach vorangehendem Anspruch, **dadurch gekennzeichnet, dass**:
- sich die Versorgungsplattform (8) gemäß der vertikalen Achse radial im Rüttler (3) erstreckt, oder
- sich die Versorgungsplattform (8) etwa vom oberen Rand (7) zur vertikalen Achse radial in diesem Rüttler (3) erstreckt, oder
- sich die Versorgungsplattform (8) gemäß der vertikalen Achse radial in diesem Rüttler (3) erstreckt und dabei ein freies Ende hat, das zwischen dem Ausgang (S) der Rampe (5) und einer Zone des oberen Randes (7) diametral gegenüber diesem Ausgang (S) im Verhältnis zur vertikalen Achse liegt.

3. System (1) nach einem der Ansprüche 1 und 2, **dadurch gekennzeichnet, dass** der erste Teil (9a) der Versorgungsplattform (8) eine Länge aufweist, die größer oder etwa größer als die Länge des zweiten Teils (9b) ist.

4. System (1) nach einem der vorangehenden Ansprüche, **dadurch gekennzeichnet, dass** der erste Teil (9a) eine ebene obere Seite (11) umfasst, die eine Stütze bildet, auf der die Komponenten (2) in der Lage sind, sich im Hinblick auf ein Ergreifen durch den gelenkigen Greifarm (10) zu verlagern.

5. System (1) nach vorangehendem Anspruch, **dadurch gekennzeichnet, dass** sich der erste Teil (9a) radial insbesondere gerade erstreckt und dabei seine obere Seite (11) liegend hat:
- in einer Ebene, die den oberen Rand (7) des Rüttlers (3) und/oder einer Öffnung (12) des Behälters (4) des Rüttlers (3) aufweist, oder
- in einer Ebene parallel oder etwa parallel zu einer Ebene, die den oberen Rand (7) des Rüttlers (3) und/oder eine Öffnung (12) des Behälters (4) des Rüttlers (3) aufweist.

6. System (1) nach einem der vorangehenden Ansprüche, **dadurch gekennzeichnet, dass** der erste Teil (9a) der Versorgungsplattform (8) eine Verteilerzone (13) umfasst, die etwa an seinem freien Ende liegt und in welcher Zone (13) die Uhrenkomponente (2) in Erwartung ihres Ergreifens durch den gelenkigen Greifarm (10) angeordnet ist.

7. System (1) nach vorangehendem Anspruch, **dadurch gekennzeichnet, dass** der erste Teil (9a) der Versorgungsplattform (8) einen Anwesenheitsdetektor (14) der Uhrenkomponente (2) in der Verteilerzone (13) umfasst.

8. System (1) nach einem der vorangehenden Ansprüche, **dadurch gekennzeichnet, dass** der Verbindungsabschnitt mit der unteren Seite des ersten Teils (9a) mechanisch verbunden ist.

9. System (1) nach einem der vorangehenden Ansprüche, **dadurch gekennzeichnet, dass** die Führungsabschnitte (15) festgelegt sind, um die Komponenten (2) zum Behälter (4) des Rüttlers (3) zu lenken, wobei mindestens eine zunächst auf dem ersten Teil (9a) dieser Versorgungsplattform (8) vorhandenen Uhrenkomponente (2) davon entfernt wird.

10. System (1) nach einem der Ansprüche 1 bis 9, **dadurch gekennzeichnet, dass** der Rüttler (3) eine Sortier-/Auswahlvorrichtung (16) der Komponenten (2) umfasst, die in der Nähe des ersten Teils (9a) der Versorgungsplattform (8) festgelegt ist.

11. System (1) nach einem der Ansprüche 1 bis 9, **dadurch gekennzeichnet, dass** der Rüttler (3) eine Trennvorrichtung (17) von mindestens zwei Komponenten (2) umfasst, die oberhalb der Verteilerzone (13) eingerichtet ist.

12. System (1) nach einem der vorangehenden Ansprüche, **dadurch gekennzeichnet, dass** die Uhrenkomponente (2) aus Komponenten (2) ausgewählt ist, die insbesondere millimetergroßen Drehteilen entsprechen.

13. System (1) nach einem der vorangehenden Ansprüche, **dadurch gekennzeichnet, dass** die Rampe (5) einen seitlichen, in Richtung der Öffnung des Rüttlers (3) gekrümmten oder etwa gekrümmten Rand (20) umfasst, der am Halten der Komponenten (2) auf dieser Rampe (5) bei deren Vorwärtskommen beteiligt ist.

14. Anlage zum automatischen Zusammenbauen (100) des ganzen oder eines Teils eines Teils, das aus mindestens einer Komponente hergestellt ist, insbesondere eines Teils für die Uhrmacherei, umfassend mindestens ein System zur kontrollierten Verteilung (1) von Komponenten (2) nach einem der vorangehenden Ansprüche.

## Claims

1. System (1) for controlled distribution of components (2), particularly components for timepieces, for an installation (100) for automatic assembly of all or part of an article produced from at least one of these components (2), particularly of a timepiece, the system (1) comprising:
- a vibrating bowl (3) provided with an enclosure (4) having a wall (6) extending right around an axis of revolution of the bowl (3) and into which said components (2) are placed in bulk, and
- an articulated gripping arm (10) provided to distribute said components (2) to said automatic assembly installation (100),
the vibrating bowl (3) comprising an ascending helical ramp (5) extending along an internal face of said wall (6) between a base and an upper edge (7) of said vibrating bowl (3) constituting an exit (S) of said ramp (5), said components (2) being able to travel along this ramp (5) towards a supply platform (8), particularly a slide, on which at least one component (2) is arranged in advance of its seizure by the articulated gripping arm (10), said supply platform (8) being connected to said exit (S) and extending above or in the enclosure (4) of the vibrating bowl (3), **characterised in that** the supply platform (8) comprises first and second parts (9a, 9b) and **in that** in the supply platform (8) the second part (9b) comprises a linking portion and two guide portions (15), the second part (9b) having an essentially trapezoidal shaped cross-section with the two guide portions (15) each forming an obtuse angle with the linking portion.

2. System (1) according to the preceding claim, **characterised in that**:
- the supply platform (8) extends radially in the vibrating bowl (3) on the vertical axis, or
- the supply platform (8) extends radially in this vibrating bowl (3) substantially from the upper edge (7) to said vertical axis, or
- the supply platform (8) extends radially in this vibrating bowl (3) on the vertical axis while having a free end included between the exit (S) of the ramp (5) and a zone of the upper edge (7) diametrically opposite this exit (S) relative to the vertical axis.

3. System (1) according to any one of Claims 1 and 2, **characterised in that** the first part (9a) of the supply platform (8) has a length greater or substantially greater than the length of the second part (9b).

4. System (1) according to any one of the preceding claims, **characterised in that** the first part (9a) comprises a planar upper face (11) forming a support on which the components (2) can move with a view to being seized by the articulated gripping arm (10).

5. System (1) according to the preceding claim, **characterised in that** the first part (9a) extends radially, particularly in a rectilinear manner while having its upper face (11) included:
- in a plane comprising the upper edge (7) of said vibrating bowl (3) and/or an opening (12) of the enclosure (4) of said vibrating bowl (3), or
- in a plane parallel or substantially parallel to a plane comprising the upper edge (7) of said vibrating bowl (3) and/or an opening (12) of the enclosure (4) of said vibrating bowl (3).

6. System (1) according to any one of the preceding claims, **characterised in that** the first part (9a) of the supply platform (8) comprises a distribution zone (13) included substantially at its free end and in which zone (13) the component (2) for timepieces is arranged in advance of its seizure by an articulated gripping arm (10).

7. System (1) according to the preceding claim, **characterised in that** the first part (9a) of the supply platform (8) comprises a device (14) for detecting the presence of the component (2) for timepieces in the distribution zone (13).

8. System (1) according to any one of the preceding claims, **characterised in that** the linking portion is mechanically connected to a lower face of the first part (9a).

9. System (1) according to any one of the preceding claims, **characterised in that** guide portions (15) are defined in order to direct the components (2) towards the enclosure (4) of the vibrating bowl (3), at least one component (2) for timepieces initially present on a first part (9a) of this supply platform (8) and discharged therefrom.

10. System (1) according to any one of Claims 1 to 9, **characterised in that** the vibrating bowl (3) comprises a device (16) for sorting/selecting the components (2) defined close to a first part (9a) of the supply platform (8).

11. System (1) according to any one of Claims 1 to 9, **characterised in that** the vibrating bowl (3) comprises a device (17) for separating at least two components (2) arranged above the distribution zone (13).

12. System (1) according to any one of the preceding claims, **characterised in that** the component (2) for timepieces is selected from components (2), particularly corresponding to axisymmetric objects of millimetric size.

13. System (1) according to any one of the preceding claims, **characterised in that** the ramp (5) comprises a lateral edge (20) that is curved or substantially curved in the direction of the opening of the vibrating bowl (3) playing a part in keeping the components (2) on this ramp (5) during their progression.

14. Installation (100) for automatic assembly of all or part of an article produced from at least one component, particularly of a timepiece, comprising at least one system (1) for controlled distribution of components (2) according to any one of the preceding claims.
